# EUROPEAN PATENT SPECIFICATION

(11) **EP 2 099 015 B1**
(45) Date of publication and mention of the grant of the patent: **04.09.2013**
(21) Application number: 09153473.5
(22) Date of filing: 23.02.2009
(51) Int. Cl.: G09G 3/20

(54) **Apparatus and method for distinguishing panel of display device**
Vorrichtung und Verfahren zur Unterscheidung eines Paneels einer Anzeige
Appareil et procédé pour distinguer le panneau d'un dispositif d'affichage

(30) Priority: 05.03.2008 KR 20080020595
(43) Date of publication of application: 09.09.2009
(73) Proprietor: Samsung Electronics Co., Ltd., Suwon-si, Gyeonggi-do, 443-742 (KR)
(72) Inventor: Baek, Seung-Jun, Suwon-si Gyeonggi-do (KR); Ha, Kyung-Jin, Suwon-si Gyeonggi-do (KR); Jo, Jae-Sik, Suwon-si Gyeonggi-do (KR); Oh, Jeong-Hyun, Suwon-si Gyeonggi-do (KR)
(74) Representative: Birchenough, Lewis

(56) References cited:
- EP-A1- 1 345 197
- EP-A2- 1 320 084
- EP-A2- 1 564 708
- WO-A1-2006/121784
- US-B1- 6 219 451

## Description

### BACKGROUND OF THE INVENTION

### 1. Field of the Invention:

The present invention relates to a display device. More particularly, the present invention relates to an apparatus and method for distinguishing a panel of a display device.

### 2. Description of the Related Art:

Increased competition among mobile terminal manufacturers has remarkably reduced the development cycle of mobile terminals and has further diversified the types of mobile terminals being developed. To follow this trend, the manufacturers are replacing type-specific parts, which are used in mobile terminals based on their types, with universal parts that can be used for all mobile terminals regardless of their types. With the availability of the universal parts, the mobile terminal manufacturers can more rapidly develop various new models of mobile terminals, securing their product competitiveness.

In manufacturing mobile terminals with the universal parts, the mobile terminal manufacturers may be provided with the same parts from several suppliers to balance the supply and demand of goods, and a display unit (e.g. a Liquid Crystal Display (LCD) module) is an example of one of the universal parts for mobile terminals. In order to use the universal parts such as the display unit, the characteristics of which may differ according to supplier, for mobile terminals regardless of their types, it is necessary to distinguish types of display units made by different suppliers and apply the proper settings to the distinguished display units.

The conventional technology for distinguishing types of display units made by different suppliers provides a method for writing unique IDentifiers (IDs) of the display units in a Random Access Memory (RAM) mounted on a display unit module, and checking the IDs written in the RAM. However, the conventional technology may increase the cost and size of the display unit due to the memory being mounted in the display unit. In addition, because the display units are supplied from several suppliers in a mixed way, IDs used to identify the display units may be incorrect. Further, a separate process of writing the IDs should be performed, and when the types of the panels, or display unit, are changed, the process of writing the IDs should be carried out again, which may cause a delay in the product manufacturing process and an a reduction in product shipments.

Further, the conventional technology provides a method for adding particular pins and for distinguishing types of display units through the added pins. However, this method may increase the volume of a Flexible Printed Circuit Board (FPCB) and connectors, provided to connect the display unit to a controller of the mobile terminal, causing an increase in the cost of the product.

EP 1345197 A1 purports to disclose a circuit and a method for customizing the display driver software of any type of LCD-display and any type of LCD-driver chip used in an LCD display system. This is accomplished through identification and registration of the information relevant for the software customization by storing the information in an LCD module identification register. A microprocessor controlling the LCD display system reads this identification register and provides the software customization elements specific to the LCD-driver chip and to the LCD-display during an initialization step of the system.

WO 2006/121784 describes a display device that can provide configuration information to a display driver circuit. US 6219451 describes a technique for allowing a notebook computer to identify the LCD panel attached to it.

### SUMMARY OF THE INVENTION

An aspect of the present invention is to address at least the above-mentioned problems and/or disadvantages and to provide at least the advantages described below. Accordingly, an aspect of the present invention is to provide an apparatus and method capable of distinguishing a type of a display device without adding separate RAM or pins.

In accordance with one aspect of the present invention, there is provided an apparatus for distinguishing a panel of a display device, the apparatus comprising: a driver Integrated Circuit, IC, of the display device, which includes a plurality of pins that can be electrically connected differently according to a type of the panel of the display device by a metal pattern formed on the panel differently according to the type of the panel, wherein the plurality of pins comprise pins provided for and used for testing an operation of the driver IC, wherein the driver IC includes an output pin for outputting an output signal indicating a type of the panel according to an electrical connection between the plurality of pins; and a controller for determining a type of the panel depending on the output signal provided from the driver IC, and for applying a control signal corresponding to the determined type of the panel to the driver IC.

In accordance with another aspect of the present invention, there is provided a method for distinguishing a panel of a display device, the method comprising: outputting, by a driver Integrated Circuit, IC, to which the panel is joined and which includes pins comprising a plurality of pins provided for and used for testing an operation of the driver IC and an output pin, an output signal on the output pin indicating a type of the panel according to an electrical connection between the plurality of pins by a metal pattern formed on the panel differently according to the type of the panel, wherein the plurality of pins can be electrically connected differently according to the type of the panel; determining, by a controller, a type of the panel depending on the output signal; and applying, by the controller, a control signal corresponding to the determined type of the panel to the driver IC.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 is a block diagram illustrating an apparatus for distinguishing a panel of a display device according to an exemplary embodiment of the present invention;
FIG. 2 is a signaling diagram illustrating a process of distinguishing a panel of a display device according to an exemplary embodiment of the present invention;
FIGs. 3A and 3B are diagrams illustrating a first exemplary process of distinguishing a panel of a display device according to an exemplary embodiment of the present invention;
FIGs. 4A and 4B are diagrams illustrating a second exemplary process of distinguishing a panel of a display device according to an exemplary embodiment of the present invention;
FIGs. 5A and 5B are diagrams illustrating a third exemplary process of distinguishing a panel of a display device according to an exemplary embodiment of the present invention; and
FIGs. 6A and 6B are diagrams illustrating a fourth exemplary process of distinguishing a panel of a display device according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

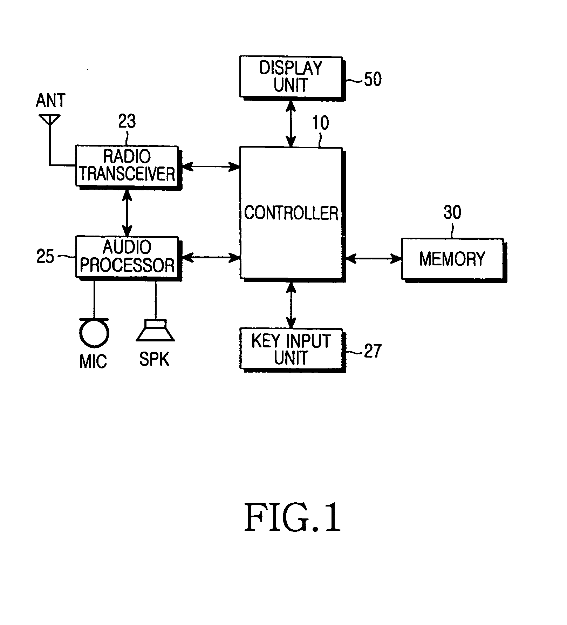

FIG. 1 is a block diagram illustrating an apparatus for distinguishing a panel of a display device according to an exemplary embodiment of the present invention, in which the display device is assumed to be a display unit used for a mobile terminal.

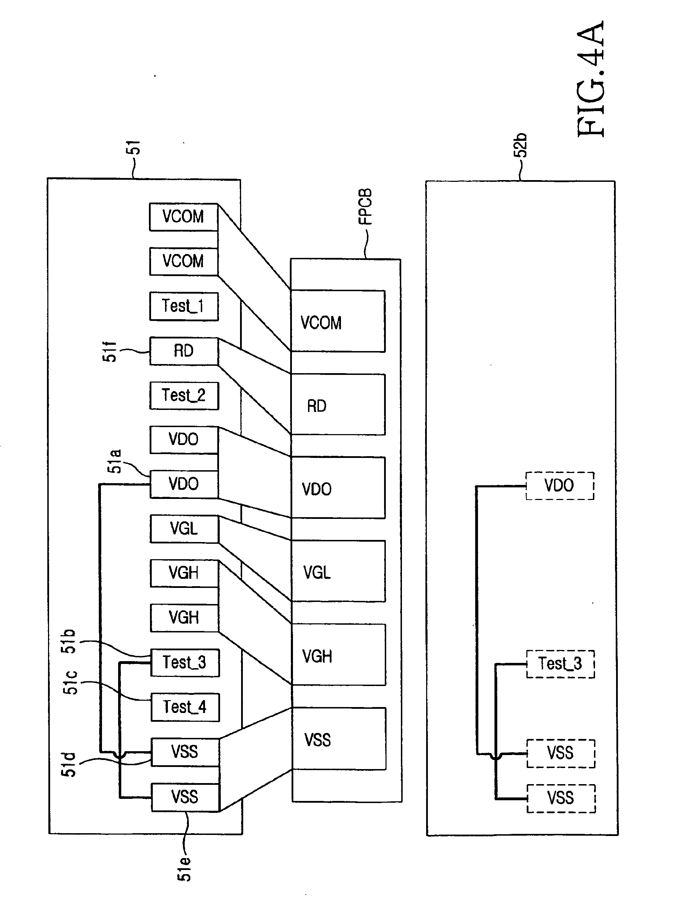

Referring to FIG. 1, a controller 10 controls overall operations of the mobile terminal, including a switching operation of drive modes. In an exemplary implementation, the controller 10 may be adapted to determine a type of a panel of a display unit 50 depending on an output signal provided from a driver Integrated Circuit (IC) 51 (see FIGs. 4A, 5A and 6A) of the display unit 50, and apply a control signal for the determined panel to the driver IC 51.

A radio transceiver 23 includes a Radio Frequency (RF) unit (not shown) and a modulator-demodulator (modem) (not shown). The RF unit includes an RF transmitter for up-converting a frequency of transmission signals and amplifying the up-converted signals, and an RF receiver for low-noise amplifying received signals and down-converting a frequency of the low-noise amplified signals. The modem includes a transmission unit for encoding and modulating transmission signals, and a reception unit for demodulating and decoding signals received from the RF unit.

An audio processor 25 may include a codec (not shown), which may include a data codec and an audio codec. The data codec handles packet data, or the like, and the audio codec processes audio signals, including voice, a multimedia file, etc. The audio processor 25 converts a digital audio signal received from the modem into an analog signal by means of the audio codec, and replays the analog signal. In addition, the audio processor 25 converts an analog audio signal created from a microphone (MIC) into a digital audio signal using the audio codec, and transfers the digital audio signal to the modem. The codec can be provided separately, or can be included in the controller 10.

A key input unit 27 includes alphanumeric keys (not shown) used for entering numeric and text information, and function keys (not shown) used to set a variety of functions. Here, the key input unit 27 can include a touch sensor (not shown). In this case, the key input unit 27 can receive a key input through the touch by the user.

A memory 30 may include a program memory and a data memory. The program memory may be provided to store a program for controlling overall operations of the mobile terminal. In an exemplary implementation, the memory 30 stores information about a type of each panel corresponding to an output signal provided from the driver IC 51 of the display unit 50, or display device.

The display unit 50 outputs, or displays, various display information generated by the mobile terminal. The display unit 50 may include a Liquid Crystal Display (LCD), Organic Light Emitting Diodes (OLED), or the like. The display unit 50, or display device, may include a panel (e.g. an LCD panel), a driver IC (e.g. an LCD driver IC), a Flexible PCB (FPCB), a backlight, etc. The driver IC 51 may be joined to the panel using a junction technique such as Tape Carrier Package (TCP), Chip-On Film (CoF), Chip-On Glass (CoG), etc. and drives the panel so that texts and images may be displayed thereon. The panels may be different in response time and screen characteristics (e.g. brightness, contrast, etc.) according to their manufacturers.

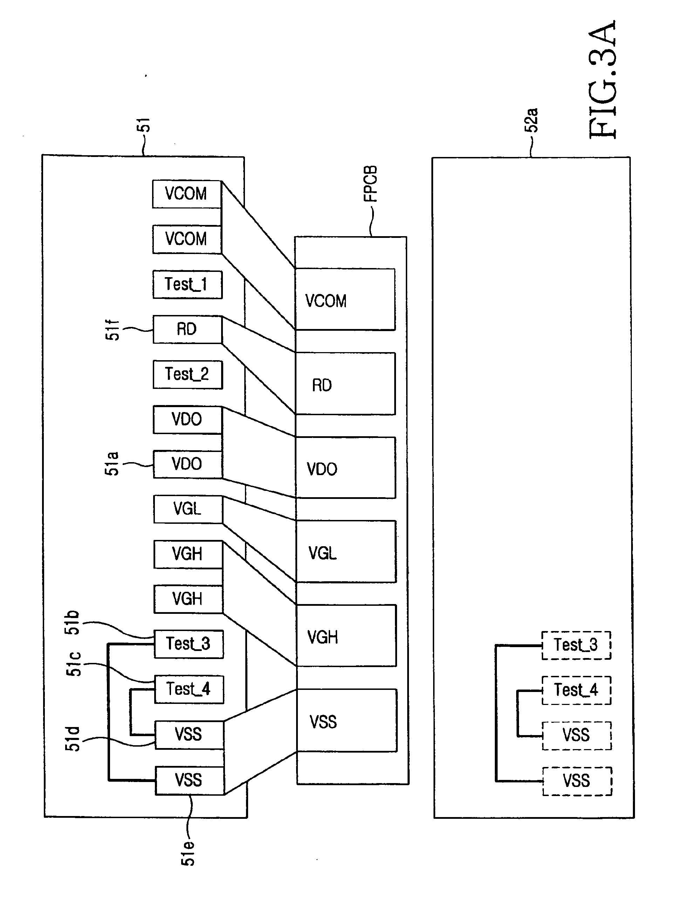

The display unit 50 according to an exemplary embodiment of the present invention will now be described with reference to FIGs. 3A through 6B, with a focus on the driver IC, the FPCB and the panel.

For convenience of the description, FIGs. 3A, 4A, 5A and 6A show only the pins applied to an exemplary embodiment of the present invention, among the numerous pins included in the driver IC 51. The driver IC 51 includes several tens of pins used for its operation, and only a few of them are used for testing an operation of the driver IC itself. In an exemplary implementation, the driver IC 51 uses test pins provided for testing its own operation as pins by which it can distinguish the panel, and these pins include a power pin 51a, two test pins 51b and 51 c, two ground pins 51d and 51e, and an output pin 51f. Thus, in the driver IC 51, the power pin 51a, the test pins 51b and 51c, and the ground pins 51d and 51e are electrically connected in various patterns according to a type of the metal pattern formed on the panel, and an output signal generated by the electric connections between the pins may be output through the output pin 51f. As a result, the display unit 50 or the driver IC 51 does not need to include separate pins or RAM to distinguish a type of the panel.

Regarding the panel according to an exemplary embodiment of the present invention, a metal pattern is formed on the panel differently according to a type of the panel. The metal pattern formed on the panel electrically connects the pins in the driver IC 51 when the junction between the panel and the driver IC 51 is made, and if a type of the metal pattern formed on the panel is changed, the pins electrically connected in the driver IC 51 are also subject to change. Thereafter, when the electrically connected pins are changed according to the type of the metal pattern, the output signal provided from the driver IC 51 is also changed. As a result, a type of the panel joined to the driver IC 51 can be determined by checking the output signal provided from the driver IC 51.

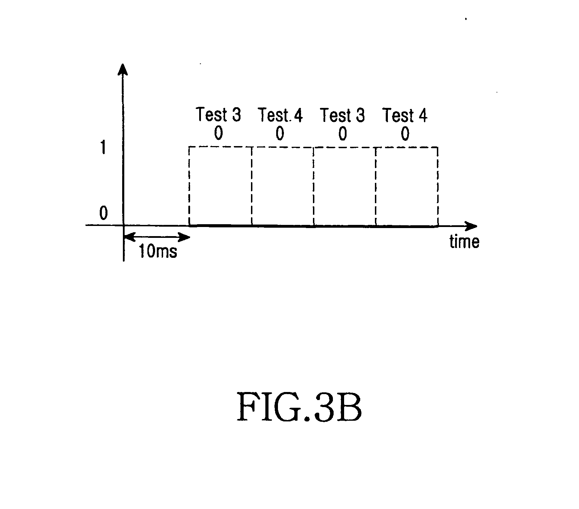

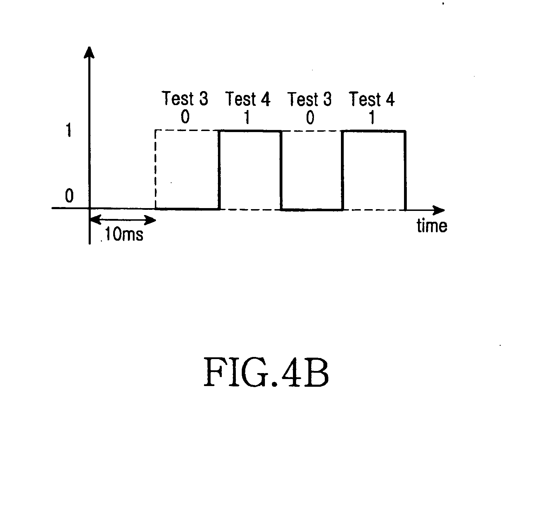

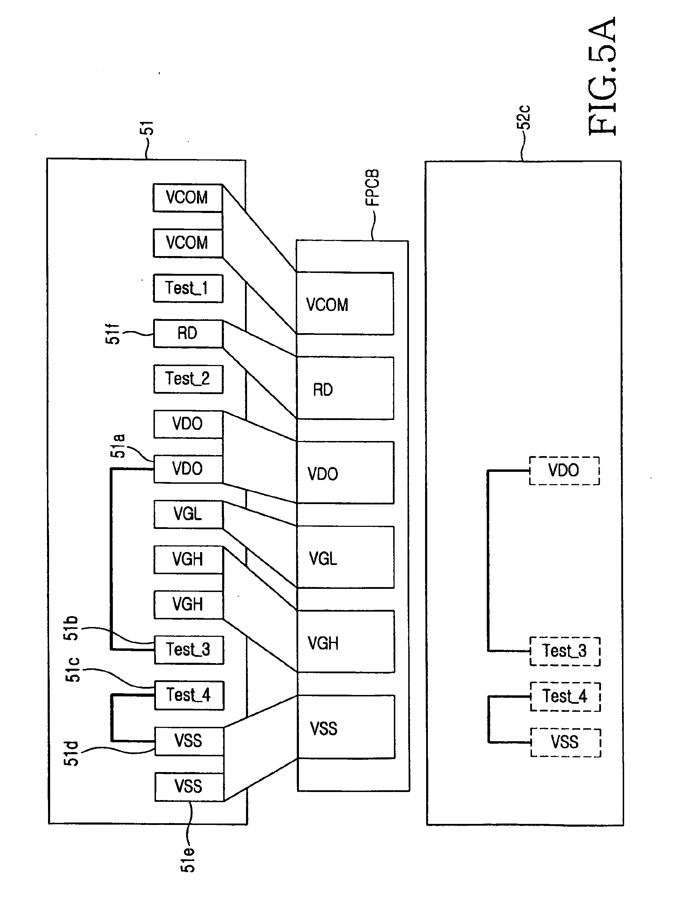

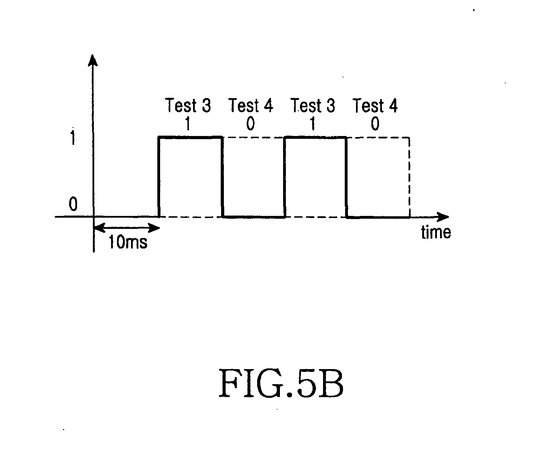

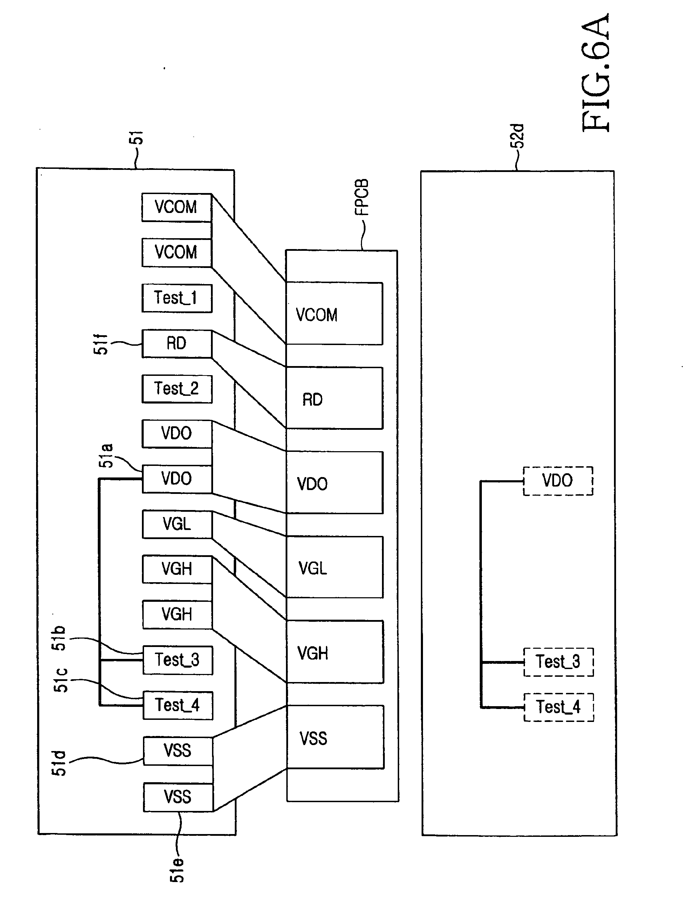

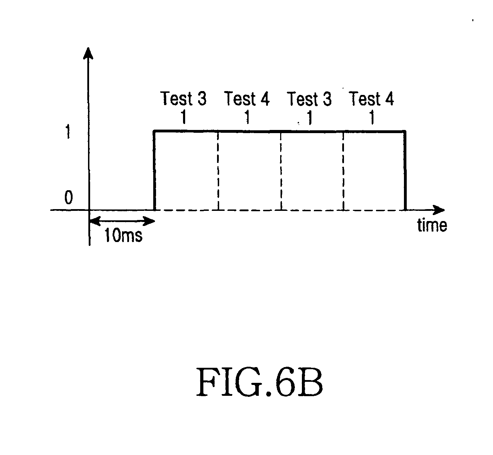

For example, FIG. 3A illustrates a panel 52a on which a metal pattern is formed that electrically connects a test pin 51b to a ground pin 51e and a test pin 51c to a ground pin 51d in the driver IC 51, and FIG. 3B illustrates an output signal of the driver IC 51, generated by the electric connection between the test pin 51b and the ground pin 51e and the electric connection between the test pin 51c and the ground pin 51d. In addition, FIG. 4A illustrates a panel 52b on which a metal pattern is formed that electrically connects the test pin 51b to the ground pin 51e and the power pin 51a to the ground pin 51d in the driver IC 51, and FIG. 4B illustrates an output signal of the driver IC 51, generated by the electric connection between the test pin 51b and the ground pin 51e and the electric connection between the power pin 51a and the ground pin 51d. FIG. 5A illustrates a panel 52b on which a metal pattern is formed that electrically connects the power pin 51a to the test pin 51 b and the test pin 51c to the ground pin 51d in the driver IC 51, and FIG. 5B illustrates an output signal of the driver IC 51, generated by the electric connection between the power pin 51a and the test pin 51b and the electric connection between the test pin 51 c and the ground pin 51d. FIG. 6A illustrates a panel 52b on which a metal pattern is formed that electrically connects the power pin 51a, the test pin 51b, and the test pin 51c in the driver IC 51, and FIG. 6B illustrates an output signal of the driver IC 51, generated by the electric connection between the power pin 51a, the test pin 51b, and the test pin 51 c.

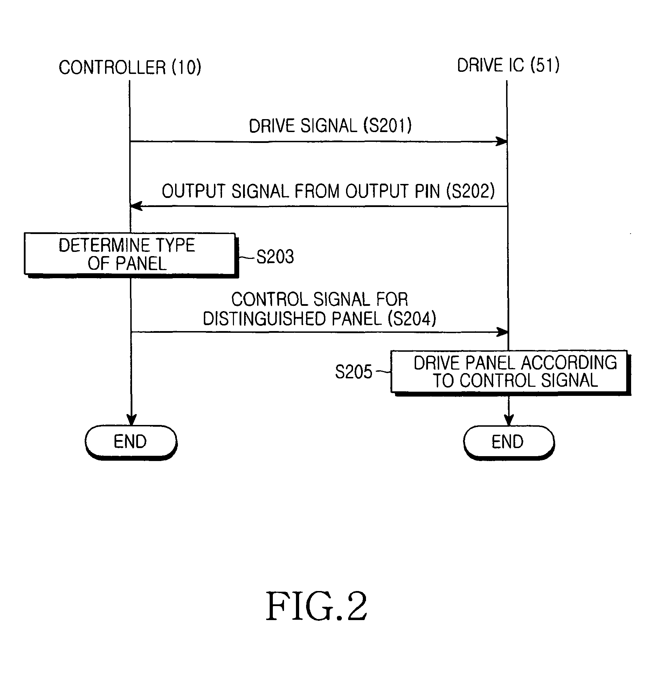

FIG. 2 is a signaling diagram illustrating a process of distinguishing a panel of a display device according to an exemplary embodiment of the present invention, and a description thereof will be given below with reference to FIGs. 3A to 6B.

When a drive signal is applied from a controller 10 to a driver IC 51 in step S201, the driver IC 51 transfers its output signal to the controller 10 through an output pin 51f in step S202.

Regarding the driver IC 51 shown in FIG. 3A, when a drive signal is applied from the controller 10 to the driver IC 51 through an FPCB, the driver IC 51 generates an output signal in which two test pins 51b and 51c both have a value of '0', after a lapse of a predefined time (e.g. 10 ms) since the receipt of the drive signal, as shown in FIG. 3B. This is because the two test pins 51b and 51c are electrically connected to the ground pins 51d and 51e as shown in FIG. 3A by the metal pattern formed on the panel 52a. Similarly, when a drive signal is applied to the driver IC 51 to which the panel 52b shown in FIG. 4A is joined, an output signal shown in FIG. 4B is output. When a drive signal is applied to a driver IC 51 to which a panel 52c shown in FIG. 5A is joined, an output signal shown in FIG. 5B is output. When a drive signal is applied to a driver IC 51 to which a panel 52d shown in FIG. 6A is joined, an output signal shown in FIG. 6B is output.

The controller 10 determines a type of the panel depending on the output signal in step S203, and applies a control signal corresponding to the determined panel to the driver IC 51 in step S204.

The controller 10 checks the output signal, which is provided from the output pin 51f through the FPCB connected to the driver IC 51, and determines a type of the panel corresponding to the output signal by referring to the memory 30. For example, the controller 10 identifies a type of the panel of the display unit 50, or display device, connected to the mobile terminal, by consulting the memory 30 in which information on various panels corresponding to the output signals of FIGs. 3B, 4B, 5B and 6B are stored. Thereafter, the controller 10 applies a control signal corresponding to the identified type of the panel to the driver IC 51 through the FPCB.

Thereafter, the driver IC 51 drives the panel according to the control signal received from the controller 10 in step S205.

The driver IC 51 receives a control signal corresponding to the panel joined thereto from the controller 10 through the FPCB, and drives the panel according to the received control signal. For example, the driver IC 51 can set a resolution (e.g. QQVGA (160×120), QCIF (176×144), QCIF+ (176×200), QVGA (320×240), CIF (352x288), VGA (640×480) and XGA (1,024×768)), the number of letters per line, brightness, contrast, etc. depending on the received control signal. In addition, the controller 10 can output at least one of acoustic information and visual information indicating of the user that the type of the panel has been determined.

As is apparent from the foregoing description, exemplary embodiments of the present invention can distinguish a panel of a display device without having to additionally mount RAM or pins, thereby making it possible to simplify the manufacturing process of mobile terminals and reduce manufacturing cost.

While the invention has been shown and described with reference to a certain exemplary embodiments thereof, it will be understood by those skilled in the art that various changes in form and details may be made therein without departing from the scope of the invention as defined by the appended claims.

## Claims

1. An apparatus for distinguishing a panel (52a-d) of a display device (50), the apparatus comprising:
a driver Integrated Circuit, IC, (51) of the display device (50), which includes a plurality of pins (51a-e) that can be electrically connected differently according to a type of the panel (52a-d) of the display device (50) by a metal pattern formed on the panel (52a-d) differently according to the type of the panel (52a-d), wherein the plurality of pins comprise pins (51a-e) provided for and used for testing an operation of the driver IC (51), wherein the driver IC (51) includes an output pin (51f) for outputting an output signal indicating a type of the panel (52a-d) according to an electrical connection between the plurality of pins (51 a-e); and
a controller (10) for determining a type of the panel (52a-d) depending on the output signal provided from the driver IC (51), and for applying a control signal corresponding to the determined type of the panel (52a-d) to the driver IC (51).

2. The apparatus of claim 1, wherein the controller (10) is configured for outputting at least one of acoustic information and visual information indicating that the type of the panel (52a-d) has been determined.

3. The apparatus of claim 1, wherein the driver IC (51) is configured for driving a panel for a mobile terminal, which supports resolutions of at least one of QQVGA, 160×120; QCIF, 176×44; QCIF+, 176×200; QVGA, 320×240; CIF, 352×288; VGA, 640×480; and XGA, 1,024×768.

4. The apparatus of claim 1, wherein the controller (10) comprises a controller for a mobile terminal.

5. The apparatus of any preceding claim, further comprising the panel (52a-d), wherein the panel (52a-d) comprises the metal pattern, wherein the metal pattern is formed differently according to the type of the panel (52a-d), and wherein the metal pattern is formed for electrically connecting the plurality of pins (51a-e) differently according to the type of the panel (52a-d) when a junction between the panel (52a-d) and the driver IC (51) is made.

6. The apparatus of any preceding claim, wherein the controller (10) is configured for applying a drive signal to the driver IC (51).

7. A method for distinguishing a panel (52a-d) of a display device (50), the method comprising:
outputting (S202), by a driver Integrated Circuit, IC, (51) to which the panel (52a-d) is joined and which includes pins comprising a plurality of pins (51a-e) provided for and used for testing an operation of the driver IC (51) and an output pin (51f), an output signal on the output pin (51f) indicating a type of the panel (52a-d) according to an electrical connection between the plurality of pins (51 a-e) by a metal pattern formed on the panel (52a-d) differently according to the type of the panel (52a-d), wherein the plurality of pins (51 a-e) can be electrically connected differently according to the type of the panel (52a-d);
determining (S203), by a controller (10), a type of the panel (52a-d) depending on the output signal; and
applying (S204), by the controller (10), a control signal corresponding to the determined type of the panel (52a-d) to the driver IC (51).

8. The method of claim 7, further comprising:
outputting at least one of acoustic information and visual information indicating that the type of the panel (52a-d) has been distinguished.

9. The method of claim 7, wherein the panel (52a-d) is a panel for a mobile terminal, which supports resolutions of at least one of QQVGA, 160×120; QCIF, 176×144; QCIF+, 176×200; QVGA, 320×240; CIF, 352×288; VGA, 640×480; and XGA, 1,024×768.

10. The method of claim 7, wherein the controller (10) comprises a controller (10) for a mobile terminal.

11. The method of any of claims 7 to 10, further comprising applying (S201), by the controller (10), a drive signal to the driver IC (51).

## Patentansprüche

1. Vorrichtung zum Unterscheiden von Tafeln (52a-d) eines Anzeigegeräts (50), wobei die Vorrichtung Folgendes umfasst:
eine Treiber-IC (Integrated Circuit) (51) des Anzeigegeräts (50), die mehrere Pins (51a-e) aufweist, die je nach Typ der Tafel (52a-d) des Anzeigegeräts (50) mit einem Metallmuster elektrisch unterschiedlich verbunden werden können, das auf der Tafel (52a-d) unterschiedlich je nach Typ der Tafel (52a-d) ausgebildet ist, wobei die mehreren Pins Pins (51a-e) beinhalten, die zum Testen eines Betriebs der Treiber-IC (51) vorgesehen sind und benutzt werden, wobei die Treiber-IC (51) einen Ausgangspin (51f) zum Ausgeben eines einen Typ der Tafel (52a-d) anzeigenden Ausgangssignals gemäß einer elektrischen Verbindung zwischen den mehreren Pins (5 1 a-e) beinhaltet; und
eine Steuerung (10) zum Ermitteln eines Typs der Tafel (52a-d) je nach dem Ausgangssignal von der Treiber-IC (51) und zum Anlegen eines dem ermittelten Typ der Tafel (52a-d) entsprechenden Steuersignals an die Treiber-IC (51).

2. Vorrichtung nach Anspruch 1, wobei die Steuerung (10) zum Ausgeben von akustischen Informationen und/oder visuellen Informationen konfiguriert ist, die anzeigen, dass der Typ der Tafel (52a-d) ermittelt wurde.

3. Vorrichtung nach Anspruch 1, wobei die Treiber-IC (51) zum Ansteuern einer Tafel für ein mobiles Endgerät konfiguriert ist, das wenigstens eine der folgenden Auflösungen unterstützt: QQVGA, 160x 120; QCIF, 176x 144; QCIF+, 176x200; QVGA, 320x240; CIF, 352x288; VGA, 640x480; und XGA, 1,024x768.

4. Vorrichtung nach Anspruch 1, wobei die Steuerung (10) eine Steuerung für ein mobiles Endgerät umfasst.

5. Vorrichtung nach einem vorherigen Anspruch, die ferner die Tafel (52a-d) umfasst, wobei die Tafel (52a-d) das Metallmuster umfasst, wobei das Metallmuster je nach Typ der Tafel (52a-d) unterschiedlich ausgebildet ist und wobei das Metallmuster zum elektrischen Verbinden der mehreren Pins (51a-e) je nach Typ der Tafel (52a-d) unterschiedlich gebildet ist, wenn ein Übergang zwischen der Tafel (52a-d) und der Treiber-IC (51) hergestellt wird.

6. Vorrichtung nach einem vorherigen Anspruch, wobei die Steuerung (10) zum Anlegen eines Ansteuerungssignals an die Treiber-IC (51) konfiguriert ist.

7. Verfahren zum Unterscheiden von Tafeln (52a-d) eines Anzeigegeräts (50), wobei das Verfahren Folgendes beinhaltet:
Ausgeben (S202), durch eine Treiber-IC (Integrated Circuit) (51), mit der die Tafel (52a-d) verbunden ist und die Pins beinhaltet, die mehrere Pins (51a-e) umfassen, die zum Testen einer Operation der Treiber-IC (51) und eines Ausgangspins (51 f) vorgesehen sind und benutzt werden, eines einen Typ der Tafel (52a-d) anzeigenden Ausgangssignals an den Ausgangspin (51f) gemäß einer elektrischen Verbindung zwischen den mehreren Pins (51a-e) durch ein Metallmuster, das auf der Tafel (52a-d) je nach Typ der Tafel (52a-d) unterschiedlich ausgebildet ist, wobei die mehreren Pins (51a-e) je nach Typ der Tafel (52a-d) elektrisch unterschiedlich verbunden werden können;
Ermitteln (S203), durch eine Steuerung (10), eines Typs der Tafel (52a-d) je nach dem Ausgangssignal; und
Anlegen (S204), durch die Steuerung (10), eines Steuersignals, das dem ermittelten Typ der Tafel (52a-d) entspricht, an die Treiber-IC (51).

8. Verfahren nach Anspruch 7, das ferner Folgendes beinhaltet:
Ausgeben von akustischen Informationen und/oder visuellen Informationen, die anzeigen, dass der Typ der Tafel (52a-d) unterschieden wurde.

9. Verfahren nach Anspruch 7, wobei die Tafel (52a-d) eine Tafel für ein mobiles Endgerät ist, das wenigstens eine der folgenden Auflösungen unterstützt: QQVGA, 160x 120; QCIF, 176x 144; QCIF+, 176x 200; QVGA, 320x 240; CIF, 352x288; VGA, 640x480; und XGA, 1,024x768.

10. Verfahren nach Anspruch 7, wobei die Steuerung (10) eine Steuerung (10) für ein mobiles Endgerät umfasst.

11. Verfahren nach einem der Ansprüche 7 bis 10, das ferner das Anlegen (8201), durch die Steuerung (10), eines Treibersignals an die Treiber-IC (51) beinhaltet.

## Revendications

1. Appareil pour distinguer le panneau (52a-d) d'un dispositif d'affichage (50), l'appareil comprenant :
un circuit intégré, CI, de pilote (51) du dispositif d'affichage (50), qui comporte une pluralité de broches (51 a-e) lesquelles peuvent être connectées électriquement de manière différente en fonction d'un type de panneau (52a-d) du dispositif d'affichage (50) en vertu d'un motif métallique formé sur le panneau (52a-d) de manière différente en fonction du type de panneau (52a-d), cas dans lequel la pluralité de broches comporte des broches (51 a-e) qui sont prévues et utilisées pour tester une opération du CI de pilote (51), cas dans lequel le CI de pilote (51) inclut une broche de sortie (51f) afin de produire un signal de sortie indiquant un type de panneau (52a-d) en fonction d'une connexion électrique entre la pluralité de broches (51a-e) ; et
un contrôleur (10) pour déterminer un type de panneau (52a-d) d'après le signal de sortie fourni à partir du CI de pilote (51), et pour injecter au CI de pilote (51), un signal de commande correspondant au type de panneau (52a-d) ayant été déterminé.

2. Appareil selon la revendication 1, le contrôleur (10) étant configuré de façon à produire l'une au moins des informations suivantes, à savoir des informations acoustiques et des informations visuelles, indiquant que le type de panneau (52ad) a été déterminé.

3. Appareil selon la revendication 1, le CI de pilote (51) étant configuré de façon à piloter un panneau pour un terminal mobile lequel prend en charge des résolutions parmi l'une au moins des suivantes, à savoir QQVGA, 160 x 120 ; QCIF, 176 x 144 ; QCIF+, 176 x 200 ; QVGA, 320 x 240 ; CIF, 352 x 288 ; VGA, 640 x 480 ; et XGA, 1024 x 768.

4. Appareil selon la revendication 1, le contrôleur (10) comprenant un contrôleur pour un terminal mobile.

5. Appareil selon l'une quelconque des revendications précédentes, comprenant en outre le panneau (52a-d), cas dans lequel le panneau (52a-d) comporte le motif métallique, cas dans lequel le motif métallique est formé de manière différente en fonction du type de panneau (52a-d), et cas dans lequel le motif métallique est formé afin de connecter électriquement la pluralité de broches (51 a-e) de manière différente en fonction du type de panneau (52a-d) lorsqu'une jonction entre le panneau (52a-d) et le CI de pilote (51) est réalisée.

6. Appareil selon l'une quelconque des revendications précédentes, le contrôleur (10) étant configuré de façon à injecter un signal d'attaque au CI de pilote (51).

7. Procédé pour distinguer le panneau (52a-d) d'un dispositif d'affichage (50), le procédé comprenant les opérations consistant à :
faire produire (S202), à un circuit intégré, CI, de pilote (51) auquel le panneau (52a-d) est relié et qui comporte des broches englobant une pluralité de broches (51 a-e) qui sont prévues et utilisées pour tester une opération du CI de pilote (51) et une broche de sortie (51f), un signal de sortie sur la broche de sortie (51f) indiquant un type de panneau (52a-d) en fonction d'une connexion électrique entre la pluralité de broches (51a-e) en vertu d'un motif métallique formé sur le panneau (52a-d) de manière différente en fonction du type de panneau (52a-d), cas dans lequel la pluralité de broches (51 a-e) peut être connectée électriquement de manière différente en fonction du type de panneau (52a-d) ;
faire déterminer (S203), à un contrôleur (10), un type de panneau (52a-d) d'après le signal de sortie ; et
faire en sorte que le contrôleur (10) injecte (S204), au CI de pilote (51), un signal de commande correspondant au type de panneau (52a-d) ayant été déterminé.

8. Procédé selon la revendication 7, comprenant en outre l'opération consistant à :
produire l'une au moins des informations suivantes, à savoir des informations acoustiques et des informations visuelles, indiquant que le type de panneau (52ad) a été distingué.

9. Procédé selon la revendication 7, le panneau (52a-d) étant un panneau pour un terminal mobile lequel prend en charge des résolutions parmi l'une au moins des suivantes, à savoir QQVGA, 160 x 120 ; QCIF, 176 x 144 ; QCIF+, 176 x 200 ; QVGA, 320 x 240 ; CIF, 352 x 288 ; VGA, 640 x 480 ; et XGA, 1024 x 768.

10. Procédé selon la revendication 7, le contrôleur (10) comprenant un contrôleur (10) pour un terminal mobile.

11. Procédé selon l'une quelconque des revendications 7 à 10, comprenant en outre l'opération consistant à faire en sorte que le contrôleur (10) injecte (S201) un signal d'attaque au CI de pilote (51).
